# EUROPEAN PATENT SPECIFICATION

(11) **EP 1 729 101 B1**
(45) Date of publication and mention of the grant of the patent: **10.09.2008**
(21) Application number: 05012031.0
(22) Date of filing: 03.06.2005
(51) Int. Cl.: G01F 23/284, B22D 11/18

(54) **Method and apparatus for detecting the level of a molten metal in a container and the depth of slag floating on it**
Verfahren und Vorrichtung zur Füllstandsdetektion einer Metallschmelze in einem Behälter und zur Dickenmessung der darauf schwimmenden Stahlschlacken
Méthode et appareil pour la détection du niveau d'un métal en fusion dans un récipient et de l'épaisseur d'une couche de laitier flottant dessus

(43) Date of publication of application: 06.12.2006
(73) Proprietor: Fondazione Torino Wireless, 10129 Torino (IT); Istituto di Elettronica e di Ingegneria dell'Informazione e delle Telecomunicazioni, con sede presso il Politecnico di Torino, Torino (IT)
(72) Inventor: Tascone, Riccardo, 10136 Torino (TO) (IT); Virone, Guiseppe, 14022 Castelnuovo Don Bosco (AT) (IT); Olivieri, Augusto, 10044 Pianezza (TO) (IT); Peverini, Oscar Antonio, 10090 Buttigliera Alta (TO) (IT)
(74) Representative: Grünecker, Kinkeldey, Stockmair & Schwanhäusser Anwaltssozietät

(56) References cited:
- EP-A- 0 859 223
- GB-A- 1 595 427
- US-A- 2 491 418
- US-A- 3 540 275
- US-A- 3 569 827
- US-A- 4 458 530
- US-A1- 2003 019 291

## Description

The present invention relates to a method and an apparatus for detecting and/or measuring predefined parameters of a liquid metal in a container. In particular, the present invention relates to a method and an apparatus for detecting the depth of mold powder in a casting mold and the level of liquid metal in said casting mold.

### BACKGROUND ART

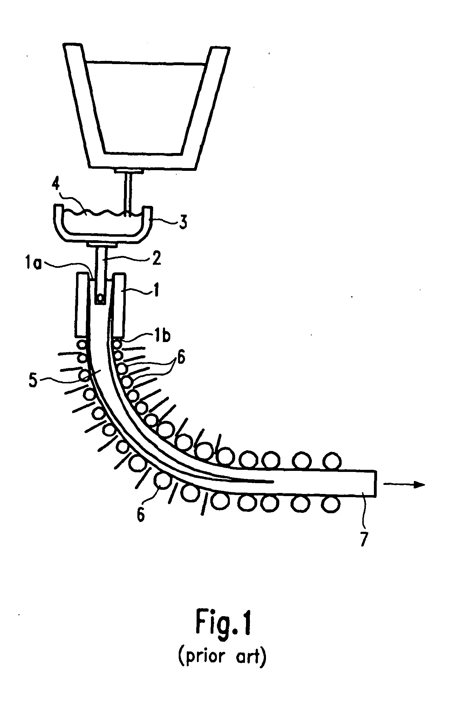

In figure 1, the basic elements of a continuous casting process in which the present invention is to be utilized are depicted. In particular, in figure 1, reference numeral 1 identifies a casting mold adapted to be supplied with a liquid metal and to discharge solidified metal; in this respect, it has to be noted that the liquid metal is introduced into the casting mold 1 through an inlet aperture 1a, whilst solidified metal (7,5) is discharged from the casting mold 1 through an outlet aperture 1b. Still in figure 1, reference numeral 3 identifies a container in which the liquid metal is stored whilst reference numeral 4 identifies the liquid metal stored in said container. Moreover, reference numeral 2 identifies a nozzle through which the liquid metal 4 is discharged from the intermediate container 3 and introduced into the casting mold 1. Finally, in figure 1, reference numerals 6 identifies rollers by means of which the solidified metal is extracted from the casting mold 1 in the form of a solid bar, said solid bar being identified in figure 1 with the reference numeral 7. Reference numeral 5 in figure 1 identifies the portion of the liquid metal still contained in the solid bar 7.

In a continuous casting process, known in the art and carried out by means of an apparatus as depicted in figure 1, a supply of molten metal 4 is maintained in an intermediate container 3; said intermediate container 3 comprises a bottom outlet from which the metal flows into a mold 1 through a nozzle 2. The mold 1 is usually cooled by means of water-cooling means (not depicted in figure 1) that chills and solidifies the molten metal so that it exits the outlet aperture 1b of the mold as a solid bar 7. In particular, as depicted in figure 1, the metal bar 7 still comprises, in the proximity of the outlet aperture 1b of the mold 1, liquid or semi liquid metal 5, whilst at a certain distance from said outlet aperture 1b, the metal bar 7 no longer contains liquid or semi liquid metal but only solid metal. As depicted in figure 1, the bar 7 follows a curved path, defined by a plurality of rollers 26 disposed on both sides of the solid bar 7, which cooperate to continuously feed the solidified bar 7. Finally, means downstream of the rolls 6 (not depicted in figure 1) separate lengths of the bar 7 for further processing. Moreover, mold powder (not depicted in figure 1) is introduced into the mold 1 on the surface of the liquid metal; to this end, several means are known for working said mold powder and introducing same into the mold 1, this means being not depicted in figure 1 for reasons of clarity. The mold powder is introduced into the casting mold 1 for several purposes, such as, for example, for lubricating the walls of the casting mold 1 and/or for controlling the speed of solidification of molten and/or liquid metal.

In a continuous casting process carried out by means of a prior art apparatus as depicted in figure 1, it assumes great relevance to measure in a reliable manner both the depth of mold powder and the level of liquid metal in the cavity; in fact, measuring the depth of the powder and the level of liquid metal allows to control these two parameters accordingly. For instance, if the depth of molding powder in the mold is to low, the speed at which the molding powder is introduced into the mold may be increased, accordingly. On the contrary, if the depth of molding powder in the mold 1 is too high, the speed at which molding powder is introduced into the mold 1 may be reduced. In the same way, if it arises that the level of liquid metal in the mold 1 is too low either the rate at which liquid metal is supplied to the mold may be increased or the speed at which the solidified bar 7 is extracted may be decreased. On the contrary, if it is detected that the liquid of molten metal in the mold is too high, either the rate at which molten metal is introduced into the mold 1 may be decreased or the speed at which the solid bar 7 is extracted from the mold 1 may be increased.

Several methods and apparatuses have been proposed over the years for the purpose of measuring the depth of molding powder and the level of molten metal in a casting mold.

For instance, European patent application no. EP0658747 discloses a continuous casting mold comprising means for gauging the level of molten metal in the mold so that it can be maintained near the top of the mold without overflowing. The known measuring device comprises a radioactive source on one side of the mold and a scintillation crystal detector on the opposite side of the mold. The radioactive source is a continuously disintegrating material, which permits particles/energy in the form of α, β and δ rays in transmuting to a lighter, elemental material. The detector is responsive to the impingement of these particles/energy to provide a given signal level which is inversely proportionate to the square of the distance between the source and the detector. The intensity of the radiation impinging on the detector and the output signal therefrom, is inversely proportional to the degree to which molten metal absorbs radiation, which in turn is a function of the level of the molten metal in the mold. Means are also disclosed in the above identified European patent application for gauging the level of molten metal in the mold as a function of the level of molten metal detected in the tube.

A further solution for measuring the level of molten metal in a continuous casting mold is known from European patent application EP0859223. In particular, the apparatus for detecting the level of liquid metal within the mold disclosed in this patent application includes an array of radiation detectors positioned to one side of the mold and extending to positions above and below the expected height of liquid metal. Moreover, a source of radiation photons is positioned on the mold side opposite to that on which the detector array is positioned, and means are provided for counting the number of incident photons received by each radiation detector or neighboring detectors in unit time. The number of incident photons received provides a measure of the height of liquid metal within the mold. Signals representative of the measures of liquid metal height may therefore be employed as control signals for controlling automatically or periodically the level of liquid metal inside the mold.

According to a further prior art method for detecting and/or measuring the level of liquid metal in a casting mold an inductive device is used, adapted to excite parasite electrical currents in the molten metal so that the level of liquid metal within the mold may be detected as a function of the power dissipated by the system.

According to still a further solution known in the art, the temperature of the walls of the mold is measured and the level of molten metal in the mold is detected and/or computed as a function of the temperature measured.

All the methods and/or apparatuses known in the art are affected by several drawbacks. In particular, the most relevant problem affecting the prior art measuring apparatuses and/or methods relates to the fact that these methods and/or apparatuses do not allow the simultaneous, reliable detection of both the level of molten metal and the depth of molding powder. In particular, since it is not possible, with the known methods and apparatuses, to distinguish between the depth of molding powder and the real level of molten metal, the values measured may not be used for gauging in a reliable manner these two parameters. This is due, in particular, to the fact that the values measured only give an indication of the total level of the material inside the mold (molten metal and molding powder) but do not allow to obtain reliable measures of these two parameters simultaneously. In other words, the measured values only give an indication of the total level of material contained in the mold, this total level arising from both the level of molten metal and the depth of molding powder.

US 5 629 706 and US 6 166 681 propose solutions for measuring both the level of molten metal and the depth of molding powder. US 5 629 706 discloses the use of phase shifts of signals reflecting on both metal and powder surfaces as a function of their frequencies over a certain bandwidth. US 6 166 681 discloses the use of the times of flight of signals reflecting on said both surfaces for measuring distances of the two surfaces and therefrom the metal level and powder depth.

Accordingly, it is an object of the present invention to provide a measuring method and apparatus allowing to overcome the drawbacks affecting the prior art methods and/or apparatuses. Moreover, it is an object of the present invention to provide a method and apparatus for measuring both the level of molten metal and the depth of molding powder in a casting mold, allowing to detect these two parameters in a reliable manner. A further object of the present invention is that of providing a measuring method and apparatus allowing to measure these two parameters simultaneously without requiring expensive and big computing equipment. Still a further object of the present invention is that of providing a measuring method and apparatus adapted to be used in combination with several of the known casting processes and systems. Since, according to the present invention, the depth of molding powder and the level of molten metal in the mold are measured simultaneously, it is also possible to gauge and/or control during the casting process, both the depth of molding powder and the level of molten metal in the mold.

According to the present invention, this is obtained by providing a method according to claim 12 and an apparatus according to claim 1 for measuring the depth of mold powder in a casting mold and the level of liquid metal in said casting mold according to which an electromagnetic open cavity is formed on the liquid metal and the depth of mold powder and the level of liquid metal are detected and/or measured as a function of the electromagnetic behavior of said cavity. Still in more detail, according to the present invention, the curve of resonance of said electromagnetic open cavity is detected and the depth of molding powder and the level of liquid metal are measured as a function of the bandwidth of said curve and the frequency of resonance of the electromagnetic open cavity.

According to the present invention, there is provided a measuring device as claimed in claim 1, namely a measuring device for measuring predefined parameters of a liquid metal in a container, said container comprising an inlet aperture through which the liquid metal is introduced into the container, characterized in that said measuring device is adapted to be placed on said inlet aperture of said container so as to form, in combination with the container, an electromagnetic open cavity, and in that said measuring device comprises detecting means adapted to detect the electromagnetic behavior of the cavity so as to obtain said predefined parameters as a function of said electromagnetic behavior.

Moreover, according to the present invention, a casting apparatus is provided as claimed in claim 8, namely a casting apparatus of the kind adapted to be used in a continuous casting process, said apparatus comprising a casting container with an inlet aperture for receiving liquid metal and an outlet aperture for discharging solidified metal, said container being adapted to contain a predefined amount of liquid metal, said apparatus being characterized in that it is equipped with a measuring device as claimed in one of claims 1 to 7, said measuring device being placed on said inlet aperture so as to form, in combination with the container and the liquid metal contained therein, an electromagnetic open cavity.

Still according to the present invention, a method as claimed in claim 12 is provided, namely a method for measuring predefined parameters of a liquid and/or molten metal in a container, said container comprising an inlet aperture through which the liquid metal is introduced into the container, said measuring method being characterized in that it comprises the steps of forming an electromagnetic open cavity above said liquid metal, detecting the electromagnetic behavior of the cavity, obtaining said predefined parameters as a function of said electromagnetic behavior.

According to the present invention there is further provided a continuous casting process as claimed in claim 18, namely a casting process comprising introducing liquid metal into a continuous casting mold and extracting solidified metal from said mold, said process further comprising measuring predefined parameters of the liquid metal in the mold, said process being characterized in that said predefined parameters are measured according to a measuring method as claimed in one of claims 12 to 17.

Further embodiments and/or details of the present invention are defined in the dependent claims.

As will become more apparent with the following disclosure, the principle on which the present invention is based relates to the realization of an electromagnetic open cavity above the liquid metal and the overlying molding powder so that predefined parameters of both the molten metal and the molding powder may be detected as a function of the electromagnetic behavior of the electromagnetic open cavity. In particular, the inventors of the present invention came to the conclusion that the electromagnetic behavior of the electromagnetic cavity is strictly related to the depth of molding powder and the level of molten metal in the mold. In particular, the inventors of the present invention came to the conclusion that if the curve of resonance of the electromagnetic cavity is detected, the depth of molding powder and the level of molten metal can be measured as a function of the bandwidth of said curve of resonance and the frequency of resonance of the cavity.

### BREIF DESCRIPTION OF THE DRAWINGS

In the following, a description will be given with reference to the drawings of particular and/or preferred embodiments of the present invention; it has, however, to be noted that the present invention is not limited to the embodiments disclosed but that the embodiments disclosed only relate to particular examples of the present invention, the scope of which is defined by the appended claims.

In particular:
figure 1 schematically depicts a prior art casting apparatus;
figure 2a depicts a cross sectional view of a component part of the measuring device according to the present invention;
figures 2b and 2c, respectively, relate to corresponding exploded views of the component part depicted in figure 2a;
figure 3a depicts in a cross sectional view a measuring device according to an embodiment of the present invention;
figure 3b relates to a perspective view of the measuring device of figures 3b;
figure 4 relates to a perspective view of a preferred embodiment of an emitting/receiving device of the measuring device according to the present invention;
figure 5a depicts a cross sectional view of a casting mold equipped with a measuring device according to the present invention;
figure 5b relates to a perspective view of the casting mold of figure 5a;
figures 6a and 6b schematically depict two particular embodiments of the measuring device according to the present invention, respectively;
figure 7 depicts an example of the data detectable by means of the measuring device according to the present invention,
figures 8a and 8b show corresponding examples of the data that is obtainable by processing the curves depicted in figure 7; and
figures 9a and 9b relate to examples of the way predefined parameters relating to the molding powder and the molten metal in a casting mold may be computed by manipulating the data depicted in figures 7, 8 a and 8b.

### DETAILED DESCRIPTION

While the present invention is described with reference to the embodiments as illustrated in the following detailed description as well as in the drawings, it should be understood that the following detailed description as well as the drawings are not intended to limit the present invention to the particular illustrative embodiments disclosed, but rather the described illustrative embodiments merely exemplify the various aspects of the present invention, the scope of which is defined by the appended claims.

As apparent from the disclosure given above, the present invention is understood to be particularly advantageous when used for detecting and/or measuring the depth of molding powder and the level of molten metal in a casting mold during a continuous casting process. For this reason, examples will be given in the following in which corresponding embodiments of the method and device of the present invention are applied to a continuous casting process and a continuous casting apparatus and are used for measuring the depth of molding powder and the level of molten metal in a casting mold. However, it has to be noted that the present invention is not limited to the particular case of a continuous casting process carried out by means of a continuous casting apparatus comprising a casting mold, but can be used in any other situation in which predefined parameters of a molten or liquid metal in a container need to be measured and/or detected. In particular, it will become apparent from the following disclosure that the present invention is also applicable in all those cases in which it is possible to realize an electromagnetic open cavity above the molten and/or liquid metal. It will also become apparent from the following disclosure that the present invention is applicable in all those cases in which the molten and/or liquid metal is contained in a container comprising an upper aperture so that an electromagnetic open cavity may be formed by placing a cover on said upper aperture, said electromagnetic open cavity being thus defined by said cover, in cooperation with the walls of the container and the molten metal in the container. In more detail, the features of the electromagnetic cavity relating the fact that said cavity is an "open" cavity is provided by means of apertures in the cover adapted to opportunely influence the electromagnetic behavior of the cavity. It has, therefore, to be understood that the present invention is applicable for detecting and/or measuring all those parameters of a molten metal, for which a relationship may be established between said parameters and the electromagnetic behavior of the cavity and/or the electromagnetic features of electromagnetic signals exiting said cavity.

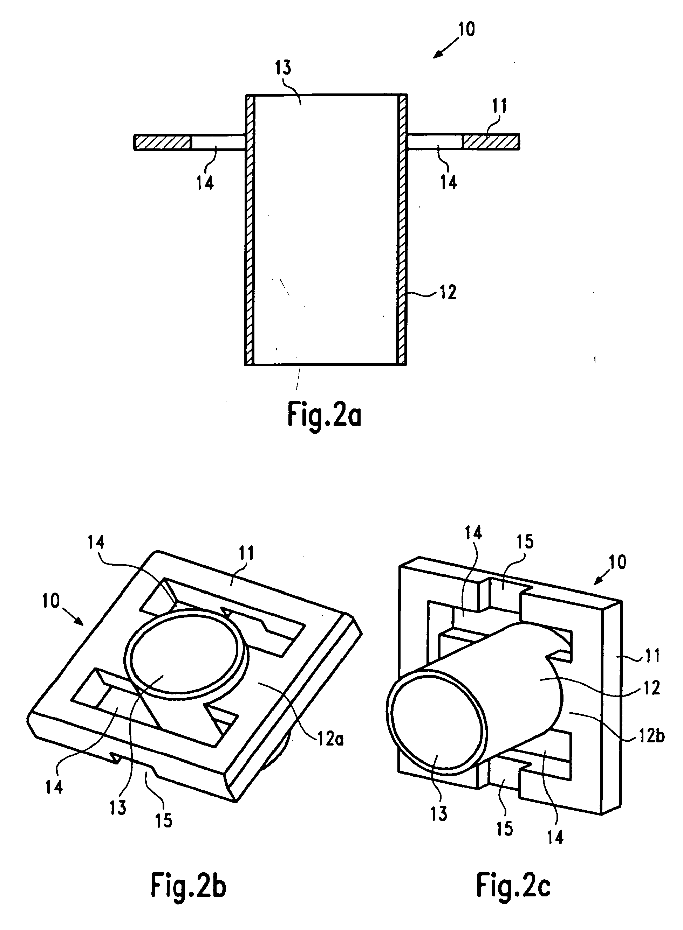

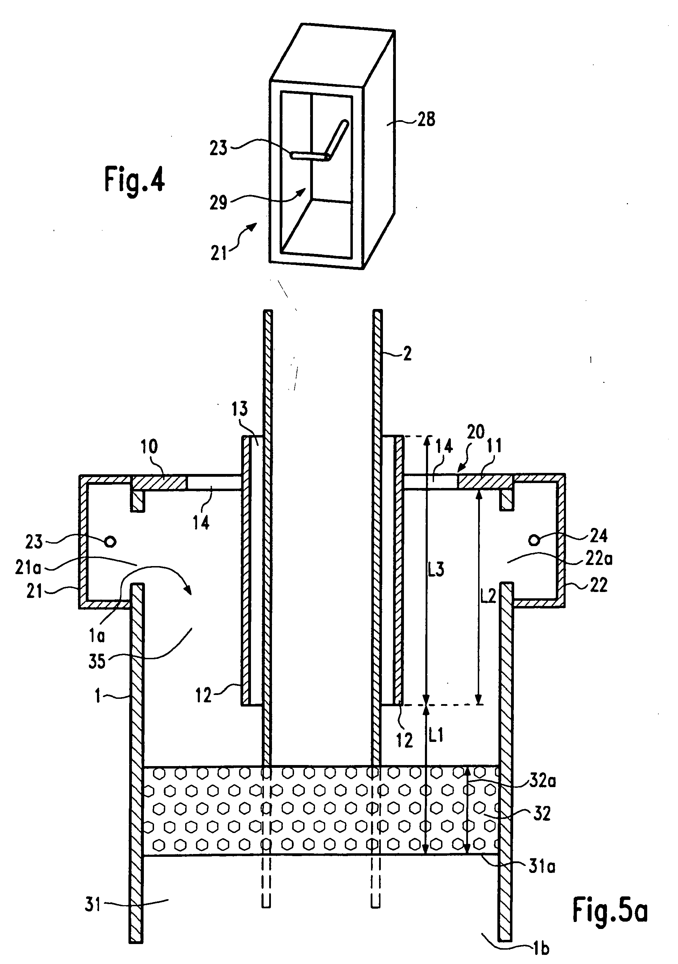

In figure 2a, reference numeral 10 identifies a metal plate or cover; as it will become more apparent from the following description, said metal plate or cover 10 belongs to a measuring device according to the present invention and is adapted to be placed on the top (on the top inlet aperture) of a container, for instance a casting mold, so as to define, in cooperation with the container and the molten metal contained therein, an electromagnetic open cavity. To this end, the metal plate or cover 10 depicted in figure 2a comprises a main plate 11 with two top apertures 14, the shape and dimensions of which may be opportunely selected to determine the electromagnetic behavior of the electromagnetic cavity underlying the plate or cover 10. In particular, the shape and dimensions of the apertures 14 may be selected so as to define the resonance mode of electromagnetic field in the cavity in a given frequency band. The metal plate or cover 10 further comprise in its central portion, a tube or pipe 12 with a central through aperture 13. Also the dimensions (diameter and length) of the central pipe or tube 12 are selected so as to opportunely influence the electromagnetic cavity underlying the plate 10, in particular, to determine the resonance mode of electromagnetic field in the cavity. Moreover, as it will become more apparent in the following, the tube or pipe 12 is adapted to receive an inlet nozzle 2 (see figure 5a) provided for introducing molten and/or liquid metal in the container underlying the cover 10.

With reference now to figures 2b and 2c, wherein identical or corresponding parts are identified by the same reference numerals, it can be seen that the tube or pipe 12 is maintained in its central position by means of an intermediate plate 12a; in particular, by means of the intermediate plate 12a, the tube or pipe 12 is maintained in a position perpendicular to the main plate 11. In figures 2b and 2c, reference numeral 15 identifies corresponding notches and/or indentations provided in the main plate 11; said notches and/or indentations are provided for the purpose of fixing to the cover 10 emitting and receiving devices adapted to introduce and receive electromagnetic signals into and from the electromagnetic open cavity underlying the cover 10, respectively. The length of the tube 12 in particular, the length of the portion of the tube 12 under the main plate 11 is selected so that the tube 12 does not come into contact with the molten metal underlying the cover 10. Whilst the reason for that will be explained in more detail in the following, it can be appreciated that the tube 12 helps in defining and/or determining the resonance mode of the electromagnetic signals transmitted through the cavity.

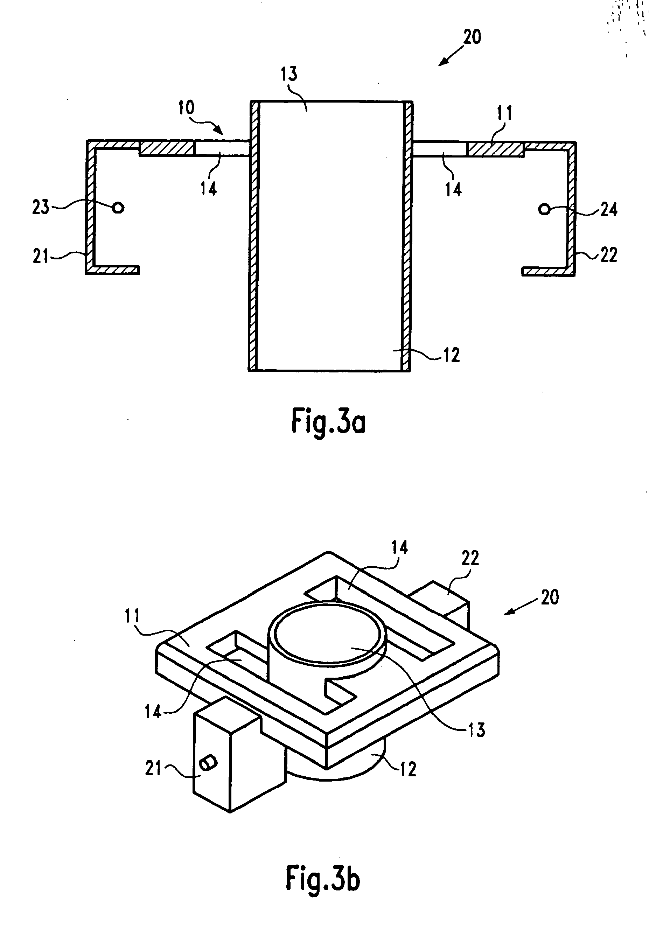

In the following, with reference to figures 3a and 3b, a measuring device according to the present invention will be described in detail. In particular, in figure 3a, reference numeral 10 identifies a metal plate or cover as described above with reference to figures 2a to 2c; accordingly, those features of the cover 10 described above with reference to figures 2a to 2c are identified in figures 3a and 3b by the same reference numerals. As apparent from figure 3a, the measuring device 20 comprises, in addition to the cover 10, an emitting device 21 and a receiving device 22. The emitting device 21 is provided for the purpose of introducing the electromagnetic signals into the cavity underlying the measuring device 20; in a similar way, the receiving device 22 is provided for the purpose of receiving the electromagnetic signals emitted by the device 21 and transmitted through the electromagnetic open cavity underlying the measuring device 20. In the particular example depicted in figure 3a, the emitting device 21 comprises a current loop 23 (see also figure 4) adapted to be connected to a coaxial cable (not depicted in the drawings). However, it will be appreciated that different emitting devices may be provided for the purpose of emitting electromagnetic signals, without departing from the scope of the present invention; the same applies for the receiving device 22.

In figure 3b, the measuring device 20 is depicted in a perspective view. In particular, it can be seen from figure 3b that the emitting and the receiving device 21 and 22 are fixed to the cover 10 on opposite sides of the main plate 11, respectively. Moreover, said emitting and receiving devices 21 and 22 are fixed to the main plate 11 in correspondence of the indentations or notches 15 described above with reference to figures 2b and 2c.

Figure 4 depicts an emitting device in an exploded view adapted to be used in a measuring device according to the present invention. To this end, the emitting device comprises a current loop 23 adapted to be connected with a coaxial cable (not depicted in the drawings). In particular the geometry of the current loops is designed in order to obtain the desired field distribution inside the cavity. The current loop 23 is received in the main body 28 having a box-like shape, with this main body comprising an aperture 29. As it will be explained in more detail below, during use, i.e. when the emitting device 21 is fixed to the cover 10 described above with reference to figures 2a to 2c, the aperture 29 is placed in correspondence of an aperture 21 a (see figure 5a) provided in a wall of the container or mold containing the molten metal. In this way, electromagnetic signals generated by the current loop 23 (or by means of devices adapted to this end and known to those skilled in the art) may be introduced into the container containing the molten metal i.e. into the electromagnetic open cavity defined, in combination, by the measuring device 20, the walls of the container and the molten metal received therein.

For the purpose of receiving the electromagnetic signals emitted by the emitting device 21 of figure 4 and transmitted through the electromagnetic open cavity, a device may be used along those known in the art; in particular, said emitting device may have a shape similar to that of the emitting device 21, i.e. the receiving device may comprise a main body with a box-like shape, with said main body comprising an aperture adapted to be placed in correspondence of an aperture of the container for the molten metal. The electromagnetic signals exiting the cavity are, therefore, captured by the box-like shaped main body and may be detected by means of detecting devices adapted to this end. Since a large class of digital/analog receivers known in the art may be used in the measuring device according to the present invention, it is considered that a more detailed description of said emitting device may be avoided.

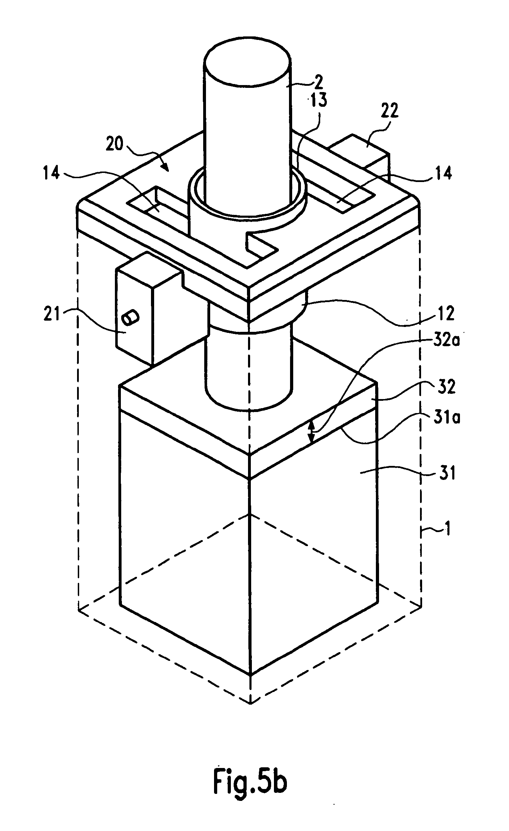

Figures 5a and 5b depict a cross sectional view and an exploded view, respectively, of a container for molten metal, for instance a casting mold, equipped with a measuring device according to the present invention. In particular, in figures 5a and 5b, the measuring device is identified by the reference numeral 20 whilst the container for molten metal is identified by the reference numeral 1. The molten metal in the container 1 is identified by the reference numeral 31 whereas the upper surface and/or upper level of said molten metal is identified by the reference numeral 31a. In figure 5a, reference numeral 32 identifies molding powder floating on the molten metal 31 and introduced into the container 1 for purposes relating to the casting process. The depth of the molding powder 32 is identified in figures 5a and 5b by the reference numeral 32a. The inlet and outlet apertures of the container or mold 1 are identified in figure 5a by the reference numerals 1 a and 1 b, respectively. In figures 5a and 5b, those portions and/or component parts already described with reference to previous drawings are identified by the same reference numerals. Accordingly, reference numeral 20 identifies a measuring device comprising a cover 10 with a main plate 11 comprising two rectangular apertures 14; moreover, an emitting device 21 and a receiving device 22 are fixed to the cover 10 on opposite sides thereof, with apertures of said emitting and receiving device being placed in proximity of corresponding apertures 21 a and 22a, respectively, of the container or mold 1. Additionally, in figure 5a, references L1, L2 and L3 identify the distance between the lower portion of the tube 12 and the upper surface of the molten metal , the distance between the lower portion of the tube 12 and the lower surface of the cover 10 and the overall length of the tube 12, respectively.

During a continuous casting process, molten metal is introduced into the container or mold 1 through the nozzle 2 received inside the tube 12 of the measuring device 20 and the metal is discharged from the container 1 through the outlet aperture 1b. Moreover, molding powder is introduced into the container or mold 1, for instance through one or both of the apertures 14 of the main plate 11 of the cover 10. As it will be explained in more detail below, the measuring device 20 (comprising the main cover 10, the tube 12 and the emitting and receiving devices 21 and 22) defines, in combination with the walls of the container 1 above the molding powder 32 and the molten metal 31, an electromagnetic open cavity 35. The inventors of the present invention have observed that the electromagnetic properties of the open cavity 35 may be used for detecting predefined parameters of both the molten metal 31 and the molding powder 32 contained in the container or mold 1. In particular, it has been established that a relationship always exists between the couple of the geometrical quantities 31 a and 32a and the couple of the electromagnetic parameters defined by the frequency of resonance of the cavity 35 and the bandwidth of the frequency response. Accordingly, if the electromagnetic behavior of the cavity 35 is detected, it is also possible to compute and/or calculate the level of molten metal 31 a and the depth of molding powder 32a in the container.

The equipment depicted in figures 5a and 5b, comprising essentially a container or mold 1 with a molten metal 31 received inside the container and molding powder 32 floating over said molten metal, and a measuring device 20 placed on the inlet aperture 1 a of said container 1 may be regarded, from the electromagnetic point of view (and along the axis of symmetry of the nozzle 2) as a length of coaxial cable comprising an external conductive element defined by the walls of the container 1 and an internal conductive element whose circular cross sectional shape is represented by the nozzle 2. Moreover, in the equipment or apparatus of figures 5a and 5b, the external and internal conductive elements are short circuited by the upper surface 31a of the liquid or molten metal 31, with the molding powder 32 representing a dielectric element floating on the molten metal 31. It is known that, in a structure of the kind schematically represented in figures 5a and 5b, the fundamental propagation mode along the axis of symmetry of the nozzle 2 is of the kind TEM; this fundamental propagation mode may be confined for the purpose of creating or defining a resonant cavity only by means of an electrical contact between the external and internal conductive elements. An electrical contact is provided in the lower part of the cavity by the upper surface 31 a of the molten metal 31. But, for evident mechanical reasons, the inlet nozzle 2 can not be brought into contact with either the walls of the container 1 or the cover 10 of the measuring device 20. Moreover, the nozzle 2 can not be brought into contact with the tube 12. For these reasons the structure is an open cavity, so that the TEM fundamental transmission mode can not be used for the purpose of detecting the parameters of interest. Accordingly, a higher-order propagation mode has to be used, in particular, the emitting device 21 has to be designed to launch this higher-order mode. Furthermore, this higher order propagation mode is strongly attenuated inside the tube 12, whilst in correspondence with the aperture 14, said higher-order mode is almost totally reflected by means of the plate 12a (see figure 2c) connecting the tube 12 to the main plate 11.

The equipment depicted in figures 5a and 5b allows, therefore, the definition or realization of an electromagnetic open cavity above the molten metal 31 and the molding powder 32; accordingly, since the electromagnetic behavior and/or properties of said cavity 35 depends from and are directly related to the level 31 a of molten metal and the depth of molding powder 32a, detecting said electromagnetic behavior and/or properties allows the indirect detection of said two parameters. In particular, as it will be explained in more detail in the following, the inventors of the present invention have observed that if the curve of resonance of the cavity 35 is detected, a relationship can be established between the frequency response of the cavity and the couple of parameters: the level of molten metal and the depth of molding powder. Accordingly, during a measuring process according to the present invention and carried out for the purpose of detecting both the level of molten metal in the mold and the depth of molding powder floating over the molten metal, electromagnetic signals emitted by the emitting device 21 within a predefined frequency range are introduced into the container 1 (i.e. into the electromagnetic open cavity 35) through the aperture 21 a of the container 1. Moreover, said electromagnetic signals traveling across the cavity 35 are captured by the receiving device 22; once received by the receiving device 22, the electromagnetic signals are detected and processed so as to determine the electromagnetic properties of the cavity. The level of the molten metal and the depth of molding powder can, therefore, be computed as a function of the detected electromagnetic signals.

According to a preferred embodiment of the measuring method according to the present invention, consecutive electromagnetic signals of corresponding different frequencies are introduced into the cavity 35 according to a predefined time schedule. In particular, for the purpose of detecting the curve of resonance of the cavity, approximately 100 electromagnetic signals with corresponding different frequencies may be introduced into the cavity, with a time interval between two consecutive signals of about 1 micro second.

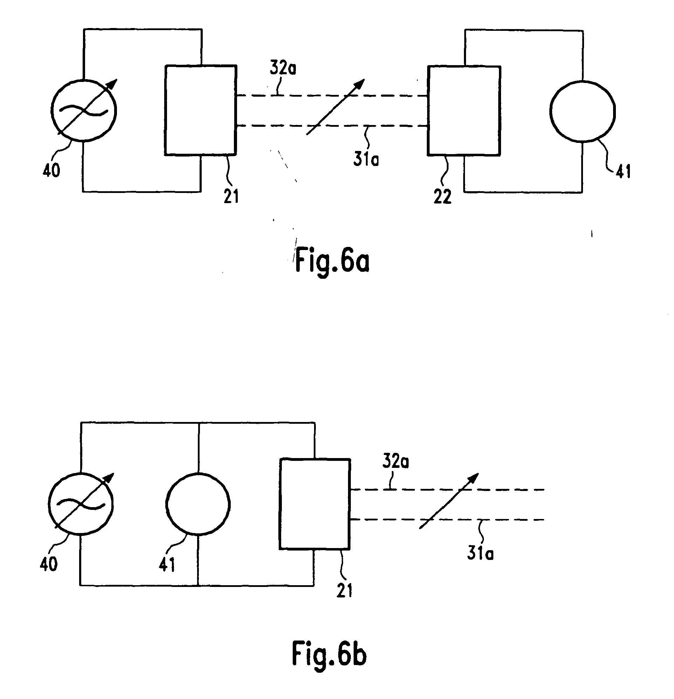

The equipment depicted in figures 5a and 5b may be schematically represented as depicted in figures 6a and 6b. As apparent from figure 6a, the emitting device 21 is electrically connected to a device 40 adapted to generate alternating electrical signals. Moreover, the receiving device 22 is connected to detecting means 41. In the scheme of figure 6a, the metal level 31a and the depth of molding powder 32a are ideally represented by the dashed lines between the emitting device 21 and the receiving device 22. The electromagnetic signals emitted by the emitting device 21 and the received by the receiving device 22 are influenced by both the level 31 a of molten metal and the depth 32a of molding powder. Accordingly, detecting the electromagnetic signals received by the receiving device 22 allows one to obtain indications of these two parameters.

In figure 6b, there is depicted a further electrical configuration of the measuring device according to the present invention; in particular, in the configuration of figure 6b, the device 40 and the detecting means 41 are provided on the same side of the cavity and both electrically connected to the emitting device 21. These configurations may be realized by using digital and/or analog devices.

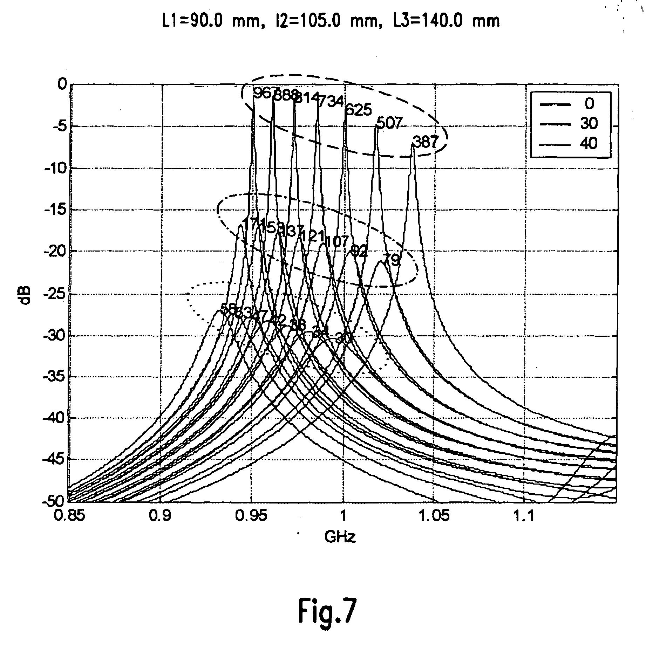

The electromagnetic behavior of the cavity 35 formed by the equipment depicted in figures 5a and 5b has been analyzed by means of full-wave techniques; the results of this detection are shown in figures 7, 8a, 8b, 9a and 9b. In particular, in figure 7, there are depicted the frequency responses of the cavity as a function of the level of molten metal and the depth of molding powder present in the container 1 as depicted in figures 5a and 5b. In particular, the frequency responses of figure 7 relate to an equipment, wherein L1 (distance between the lower end portion of the tube 12 and the upper surface of the molten metal) corresponds to 90 mm, L2 (distance between the lower end portion of the tube 12 and the lower surface of the main plate 11) corresponds to 105 mm and L3 (overall length of the tube 12) corresponds to 140 mm. The curves depicted in figure 7 represent the curves of resonance of the cavity, wherein the intensity of the signals received is reported as a function of the frequency at which said signals were emitted. In more detail, in figure 7, the curves identified by the dashed circle represent the curve of resonance of the cavities in the case in which no molding powder is floating on the molten metal. The curves identified by the dash-dotted circle represent the curves of resonance in the case in which the depth of molding powder corresponds to 30 mm. Finally, the curves identified by the dotted circle represent the curves of resonance of the cavity in the case in which the depth of molding powder corresponds to 40 mm. Finally, for each group of curves, each different curve relates to a corresponding different level of molten metal inside the container. As apparent from figure 7, when the level of molten metal increases, also the frequencies of resonance increase. Moreover, when the depth of molding powder increases, the intensity of the electromagnetic signals received (the intensities at the frequencies of resonance) decrease and the bandwidth of each curve of resonance becomes larger. A two-dimensional relationship may, therefore, be established between the frequency of resonance of the cavity and the bandwidth of the frequency response from one hand, and the level of molten metal and the depth of molding powder on the other hand.

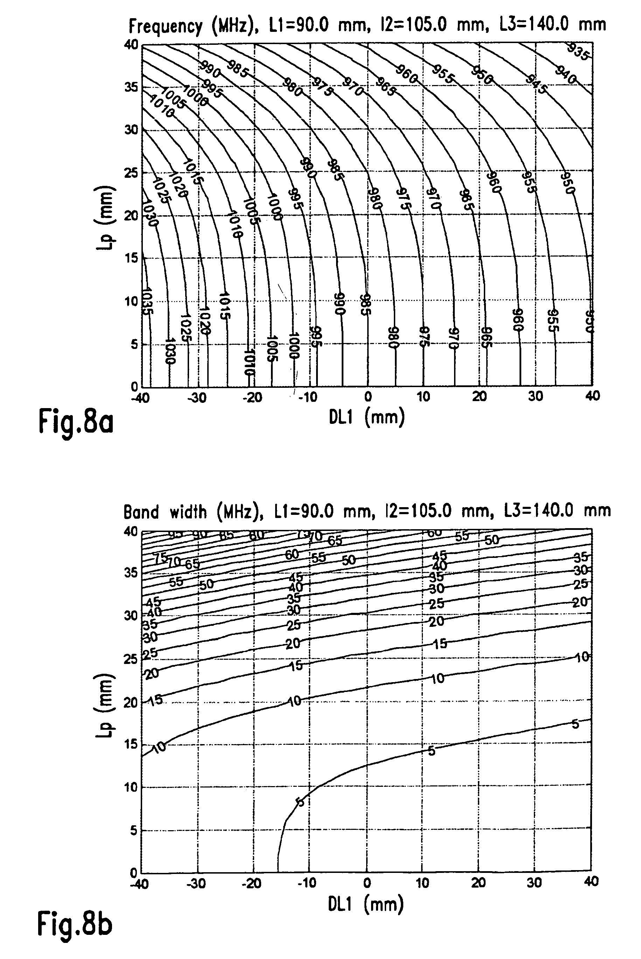

For the purpose of accurately detecting the behavior of the equipment depicted in figures 5a and 5b (i.e. of the resonant cavity 35) there are depicted in figure 8a the iso-level curves of the frequency of resonance as a function of the level of molten metal and the depth of molding powder within the equipment. In particular, figure 8a corresponds to the case of a level of molten metal varying from 50 mm to 130 mm; (this is to say that in figure 8a, the value 0 along the X axis corresponds to a nominal level of molten metal of 90 mm) and of a depth of molding powder varying from 0 to 40 mm (Y axis in figure 8a). In figure 8a, the several iso-level lines depicted therein join the possible combinations of values of the depth of molding powder and the level of molten metal. In the same way, in figure 8b, there are depicted the iso-level curves or lines of the bandwidth of the curves of resonance of the equipment (i.e. of the resonant open cavity). Again, in the case of figure 8b, the level of molten metal varies from -40 mm to +40 mm, about a nominal level of 90 mm (X axis in figure 8b), and the depth of molding powder varies from 0 to 40 mm (Y axis in figure 8b). Moreover, in the case of figure 8b, the bandwidths were measured for values of intensity of the signals corresponding to the intensity at the resonance frequency diminutive of 10 dB.

It appears from figure 8a that the resonance frequency does not only depend on the level of molten metal and from figure 8b that the bandwidth of the frequency response does not only depend on the depth of molding powder. However, the two families of iso-level curves are substantially perpendicular to each other. Therefore the two-dimensional relationship represented in figures 8a and 8b can be inverted in order to find out the the level of molten metal and the depth of molding powder from the measured resonance frequency and the measured bandwidth of the frequency response.

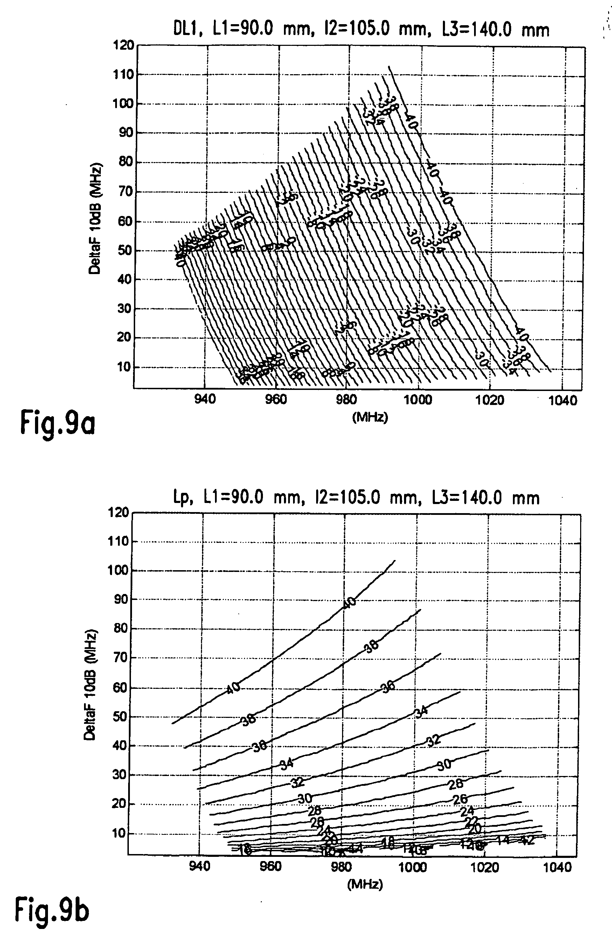

The results of this inversion are depicted in figures 9a and 9b. Figures 9a and 9b show that it is possible to obtain the depth of the molding powder and the level of molten metal as a function of the frequency response of the electromagnetic open cavity. In particular, it arises from figure 9a that for a variation of the level of liquid metal of about 1 mm, the corresponding variation of the frequency of resonance is within 1 MHz and the corresponding variation of the bandwidth is within 3.5 MHz; it results, therefore, that with respect to the level of liquid metal, the sensitivity of the measuring equipment corresponds to about 1 MHz/mm for the resonance frequency and 3.5 MHz/mm for the bandwidth. In the same way, it results from figure 9b that for a variation of the depth of molding powder of about 2 mm, the corresponding variation of the bandwidth of the curve of resonance of the cavity (by -10 dB) is within 10 MHz and the variation of the resonance frequency is within 20 MHz; accordingly, with respect to the depth of molding powder, the sensitivity of the equipment may be estimated to be approximately 5 MHz/mm for the bandwidth, and 10 MHz/mm for the resonance frequency.

It results, therefore, from the above that detecting means with standard electronic equipment may be used for the purpose of appreciating variations in the level of molten metal and in the depth of molding powder within an accuracy of 1 mm.

In conclusion, the present invention allows the measurement of the level of molten metal in the casting mold and the depth of molding powder floating over the molten metal. These two parameters may be measured simultaneously as a function of different properties of an electromagnetic open cavity formed inside the casting mold. The present invention allows, therefore, to overcome the most important drawbacks affecting the prior art measuring devices and methods, essentially relating to the fact that the prior art measuring devices and methods only allow the measuring of a single parameter comprehensive of both the molten metal and the molding powder flowing over the metal. Moreover, the measuring method and device according to the present invention may be applied to a large class of the casting systems known in the art. Furthermore, standard electronic equipment may be used for the purpose of measuring the level of molten metal and the depth of molding powder in a reliable manner, with an evident advantage concerning the overall costs of the equipment. Finally, the measuring method and device according to the present invention do not need to be used in combination with devices and/or means for gauging both the depth of the molding powder and the level of molten metal in the casting mold.

Of course, it should be understood that a wide range of changes and modifications can be made to the embodiments described above without departing from the scope of the present invention as defined in the claims. For instance, said changes and modifications may relate to the kind of emitting and receiving means used for introducing electrical signals into the cavity and for receiving the electrical signals exiting the cavity for the purpose of detecting the electromagnetic behavior and/or properties of the cavity.

## Claims

1. A measuring device (20) for measuring predefined parameters of a liquid metal (31) in a container (1), said container comprising an inlet aperture (1 a) through which the liquid metal is introduced into the container, said measuring device comprising a metal cover (10) adapted to be placed on said inlet aperture of said container so as to form, in combination with the container, an electromagnetic resonant open cavity (35), said measuring device comprising detecting means (41) adapted to detect the electromagnetic behavior of the cavity so as to obtain said predefined parameters as a function of said electromagnetic behavior, said device comprising an emitting device (21) and a receiving device (22) adapted to introduce electromagnetic input signals into the cavity (35) and to receive output electromagnetic signals from said cavity,
**characterized in that**
said device is adapted to measure both the level of said liquid metal (31) in said container (1) and the depth of molding powder (32) floating on said liquid metal, **in that** said detecting means (41) are coupled to said receiving device (22) and are adapted to detect both the frequency of resonance of the cavity, and the bandwidth of the curve of resonance, and **in that** said emitting device further comprises computing means adapted to calculate said level of said liquid metal and said depth of said molding powder as a function of both said frequency of resonance of the cavity and said bandwidth of the curve of resonance.

2. A measuring device as claim 1,
**characterized in that**
said emitting device (21) and said receiving device (22) are adapted to introduce said electromagnetic input signals into said cavity (35) and to receive said electromagnetic output signals from said (35) through corresponding input and output apertures (21 a, 22a) of said container respectively.

3. A measuring device as claimed in one of claims 1 and 2,
**characterized in that**
said emitting device (21) is adapted to introduce said electromagnetic signals into said cavity within a predefined frequency range.

4. A measuring device as claimed in one of claims 1 to 3,
**characterized in that**
said emitting device is adapted to introduce said electromagnetic signals into the cavity according to a predefined time schedule.

5. A measuring device as claimed in one of claims 1 to 4,
**characterized in that**
said cover comprises a main plate (11) with at least one through aperture (14), the shape and dimension of which are adapted to influence the electromagnetic behavior of the cavity.

6. A measuring device as claimed in claim 5,
**characterized in that**
said cover comprises at least two apertures (14) of a rectangular shape.

7. A measuring device as claimed in one of claims 5 and 6,
**characterized in that**
said device further comprises a tube (12) firmly fixed to said main plate (11) and disposed transversely with respect to said main plate (11).

8. A casting apparatus of the kind adapted to be used in a continuous casting process, said apparatus comprising a casting container (1) with an inlet aperture (1 a) for receiving liquid metal and an outlet aperture (1b) for discharging solidified metal, said container being adapted to contain a predefined amount of liquid metal (31) and a predefined amount of molding powder floating on said liquid metal, said apparatus being
**characterized in that**
it is equipped with a measuring device (20) as claimed in one of claims 1 to 7, said cover of said measuring device being placed on said inlet aperture so as to form, in combination with the container and the liquid metal contained therein, an electromagnetic resonant open cavity (35).

9. A casting apparatus as claimed in claim 8,
**characterized in that**
it further comprises means for introducing molding powder (32) into said container.

10. A casting apparatus as claimed in claim 9,
**characterized in that**
it further comprises means for adjusting the depth of molding powder in the container as a function of the depth of molding powder as detected.

11. A casting apparatus as claimed in one of claims 8 to 10,
**characterized in that**
it further comprises means for adjusting the level of liquid metal in the container as a function of the level as detected.

12. A measuring method for measuring predefined parameters of a liquid metal (31) in a container (1), said container comprising an inlet aperture (1a) through which the liquid metal is introduced into the container, said measuring method comprising the steps of:
forming an electromagnetic resonant open cavity (35) above said liquid metal (31);
detecting the electromagnetic behavior of the cavity so as to obtain said predefined parameters as a function of said electromagnetic behavior, said measuring method further comprising the steps of:
introducing electromagnetic input signals into said cavity (35);
receiving electromagnetic output signals from said cavity,
**characterized in that**
it comprises detecting both the frequency of resonance of the cavity and the bandwidth of the curve of resonance, and **in that** it comprises
calculating one or both of the level of said liquid metal in said container and the depth of the molding powder floating on said liquid metal as a function of said frequency of resonance of the cavity and said bandwidth of the curve of resonance.

13. A measuring method as claimed in claim 12,
**characterized in that**
electromagnetic signals within a predefined frequency range are introduced into the cavity.

14. A measuring method as claimed in one of claims 12 and 13,
**characterized in that**
said electromagnetic signals are introduced into the cavity according to a predefined time schedule.

15. A measuring method as claimed in one of claims 12 to 14,
**characterized in that**
said container is a casting container adapted to be used in a continuous casting process and comprises an outlet aperture (1b) for discharging solidified metal, and **in that** said electromagnetic open cavity is defined by means of a cover (10), said cover comprising a main plate (11) with at least one through aperture, the shape and dimension of which are adapted to influence the electromagnetic behavior of the cavity.

16. A measuring method as claimed in claim 15,
**characterized in that**
said main plate (11) comprises at least two apertures (14) of a rectangular shape.

17. A measuring method as claimed in one of claim 15 and 16,
**characterized in that**
the electromagnetic behavior of the cavity is further influenced by means of a tube (12) firmly fixed to the main plate (11) and disposed transversely with respect to the cover (11).

18. A continuous casting process comprising introducing liquid metal (31) into a continuous casting mold (1) and extracting solidified metal from said mold, said process further comprising measuring predefined parameters of the liquid metal in the mold, said process being
**characterized in that**
said predefined parameters comprise one or both of the level of liquid metal in said mold and the depth of molding powder floating on said liquid metal, these being measured according to a measuring method as claimed in one of claims 12 to 17,

19. A process as claimed in claim 18, further comprising introducing molding powder (32) into said mold.

20. A process as claimed in one of claims 18 and 19,
**characterized in that**
said process further comprises adjusting the depth of molding powder in the mold as a function of the depth of molding powder as measured.

21. A process as claimed in one of claims 18 to 20,
**characterized in that**
it further comprises the step of adjusting the level of liquid metal in the mold as a function of the level as measured.

## Patentansprüche

1. Messeinrichtung (20) zum Messen vordefinierter Parameter eines flüssigen Metalls (31) in einem Behälter (1), wobei der Behälter eine Einlassöffnung (1a) umfasst, über die das flüssige Metall in den Behälter eingeleitet wird, die Messeinrichtung eine Metallabdeckung (10) umfasst, die zum Anbringen auf der Einlassöffnung des Behälters eingerichtet ist, um zusammen mit dem Behälter einen elektromagnetisch resonanten offenen Hohlraum (35) zu bilden, die Messeinrichtung eine Erfassungseinrichtung (41) umfasst, die zum Erfassen des elektromagnetischen Verhaltens des Hohlraums eingerichtet ist, um die vordefinierten Parameter als eine Funktion des elektromagnetischen Verhaltens zu ermitteln, die Vorrichtung eine emittierende Einrichtung (21) und eine empfangende Einrichtung (22) umfasst, die zum Einleiten elektromagnetischer Eingangssignale in den Hohlraum (35) und zum Empfangen elektromagnetischer Ausgangssignale aus dem Hohlraum eingerichtet sind,
**dadurch gekennzeichnet, dass**
die Einrichtung so eingerichtet ist, dass sie sowohl den Pegel des flüssigen Metalls (31) in dem Behälter (1) als auch die Tiefe von Formpuder (32) misst, das auf dem flüssigen Metall schwimmt, **dadurch**, dass die Erfassungseinrichtung (41) mit der empfangenden Einrichtung (22) gekoppelt ist und sie so eingerichtet ist, dass sie sowohl die Resonanzfrequenz des Hohlraums als auch die Bandbreite der Resonanzkurve erfasst, und **dadurch**, dass die emittierende Einrichtung des Weiteren eine Berechnungseinrichtung umfasst, die so eingerichtet ist, dass sie den Pegel des flüssigen Metalls und die Tiefe des Formpuders als eine Funktion sowohl der Resonanzfrequenz des Hohlraums als auch der Bandbreite der Resonanzkurve berechnet.

2. Messeinrichtung nach Anspruch 1,
**dadurch gekennzeichnet, dass**
die emittierende Einrichtung (21) und die empfangende Einrichtung (22) so eingerichtet sind, dass sie die elektromagnetischen Eingangssignale in den Hohlraum (35) einleiten und die elektromagnetischen Signale von dem Hohlraum (35) über entsprechende Eingangs- bzw. Ausgangsöffnungen (21a, 22a) des Behälters empfangen.

3. Messeinrichtung nach einem der Ansprüche 1 und 2,
**dadurch gekennzeichnet, dass**
die emittierende Einrichtung (21) so eingerichtet ist, dass sie die elektromagnetischen Signale innerhalb eines vordefinierten Frequenzbereiches in den Hohlraum einleitet.

4. Messeinrichtung nach einem der Ansprüche 1 bis 3,
**dadurch gekennzeichnet, dass**
die emittierende Einrichtung so eingerichtet ist, dass sie die elektromagnetischen Signale entsprechend einem vordefinierten Zeitraum in den Hohlraum einleitet.

5. Messeinrichtung nach einem der Ansprüche 1 bis 4,
**dadurch gekennzeichnet, dass**
die Abdeckung eine Hauptplatte (11) mit wenigstens einer Durchgangsöffnung (14) umfasst, deren Form und Abmessung so eingerichtet sind, dass sie das elektromagnetische Verhalten des Hohlraums beeinflussen.

6. Messeinrichtung nach Anspruch 5,
**dadurch gekennzeichnet, dass**
die Abdeckung wenigstens zwei Öffnungen (14) rechteckiger Form umfasst.

7. Messeinrichtung nach einem der Ansprüche 5 und 6,
**dadurch gekennzeichnet, dass**
die Vorrichtung des Weiteren eine Röhre (12) umfasst, die an der Hauptplatte (11) befestigt und in Bezug auf die Hauptplatte (11) quer angeordnet ist.

8. Gießvorrichtung des Typs, der zum Einsatz in einem Stranggussverfahren eingerichtet ist, wobei die Vorrichtung einen Gießbehälter (1) mit einer Einlassöffnung (1 a) zum Aufnehmen von flüssigem Metall und einer Auslassöffnung (1 b) zum Ausstoßen von verflüssigtem Metall umfasst, der Behälter so eingerichtet ist, dass er eine vordefinierte Menge an flüssigem Metall (31) und eine vordefinierte Menge an Formpuder enthält, das auf dem flüssigen Metall schwimmt, und die Vorrichtung
**dadurch gekennzeichnet ist, dass**
sie mit einer Messeinrichtung (20) nach einem der Ansprüche 1 bis 7 ausgestattet ist, die Abdeckung der Messeinrichtung so auf der Einlassöffnung angeordnet ist, dass sie zusammen mit dem Behälter und dem darin enthaltenen flüssigen Metall einen elektromagnetisch resonanten offenen Hohlraum (35) bildet.

9. Gießvorrichtung nach Anspruch 8,
**dadurch gekennzeichnet, dass**
sie des Weiteren eine Einrichtung zum Einleiten von Formpuder (32) in den Behälter umfasst.

10. Gießvorrichtung nach Anspruch 9,
**dadurch gekennzeichnet, dass**
sie des Weiteren eine Einrichtung zum Regulieren der Tiefe von Formpuder in dem Behälter in Abhängigkeit von der erfassten Tiefe des Formpuders umfasst.

11. Gießvorrichtung nach einem der Ansprüche 8 bis 10,
**dadurch gekennzeichnet, dass**
sie des Weiteren eine Einrichtung zum Regulieren des Pegels von flüssigem Metall in dem Behälter in Abhängigkeit von dem erfassten Pegel umfasst.

12. Messverfahren zum Messen vordefinierter Parameter eines flüssigen Metalls (31) in einem Behälter (1), wobei der Behälter eine Einlassöffnung (1a) umfasst, über die das flüssige Metall in den Behälter eingeleitet wird, und das Messverfahren die folgenden Schritte umfasst:
Ausbilden eines elektromagnetisch resonanten offenen Hohlraums (35) über dem flüssigen Metall (31);
Erfassen des elektromagnetischen Verhaltens des Hohlraums, um die vordefinierten Parameter in Abhängigkeit von dem elektromagnetischen Verhalten zu ermitteln, wobei das Messverfahren des Weiteren die folgenden Schritte umfasst:
Einleiten elektromagnetischer Eingangssignale in den Hohlraum (35);
Empfangen elektromagnetischer Ausgangssignale aus dem Hohlraum,
**dadurch gekennzeichnet, dass**
es Erfassen sowohl der Resonanzfrequenz des Hohlraums als auch der Bandbreite der Resonanzkurve umfasst, und **dadurch**, dass es umfasst:
Berechnen des Pegels des flüssigen Metalls in dem Behälter und/oder der Tiefe des Formpuders, das auf dem flüssigen Metall schwimmt, in Abhängigkeit von der Resonanzfrequenz des Hohlraums und der Bandbreite der Resonanzkurve.

13. Messverfahren nach Anspruch 12,
**dadurch gekennzeichnet, dass**
elektromagnetische Signale innerhalb eines vorgegebenen Frequenzbereiches in den Hohlraum eingeleitet werden.

14. Messverfahren nach einem der Ansprüche 12 und 13,
**dadurch gekennzeichnet, dass**
die elektromagnetischen Signale entsprechend einem vordefinierten Zeitplan in den Hohlraum eingeleitet werden.

15. Messverfahren nach einem der Ansprüche 12 bis 14,
**dadurch gekennzeichnet, dass**
der Behälter ein Gießbehälter ist, der zum Einsatz in einem Stranggussverfahren eingerichtet ist und eine Auslassöffnung (1b) zum Ausstoßen von verfestigtem Metall umfasst, und **dadurch**, dass der elektromagnetische offene Hohlraum durch eine Abdeckung (10) begrenzt wird, wobei die Abdeckung eine Hauptplatte (11) mit wenigstens einer Durchgangsöffnung umfasst, deren Form und Abmessung so eingerichtet sind, dass sie das elektromagnetische Verhalten des Hohlraums beeinflussen.

16. Messverfahren nach Anspruch 15,
**dadurch gekennzeichnet, dass**
die Hauptplatte (11) wenigstens zwei Öffnungen (14) einer rechteckigen Form umfasst.

17. Messverfahren nach einem der Ansprüche 15 und 16,
**dadurch gekennzeichnet, dass**
das elektromagnetische Verhalten des Hohlraums des Weiteren mittels einer Röhre (12) beeinflusst wird, die an der Hauptplatte (11) befestigt und in Bezug auf die Abdeckung (11) quer angeordnet ist.

18. Stranggussverfahren, das Einleiten von flüssigem Metall (31) in eine Stranggussform (1) und Entnehmen von verfestigtem Metall aus der Form umfasst, wobei das Verfahren des weiteren Messen vordefinierter Parameter des flüssigen Metalls in der Form umfasst und das Verfahren
**dadurch gekennzeichnet ist, dass**
die vordefinierten Parameter den Pegel von flüssigem Metall in der Form und/oder die Tiefe von Formpuder umfassen, das auf dem flüssigen Metall schwimmt, wobei diese entsprechend einem Messverfahren nach einem der Ansprüche 12 bis 17 gemessen werden.

19. Verfahren nach Anspruch 18, das des Weiteren Einleiten von Formpuder (32) in die Form umfasst.

20. Verfahren nach einem der Ansprüche 18 und 19,
**dadurch gekennzeichnet, dass**
das Verfahren des Weiteren Regulieren der Tiefe des Formpuders in der Form in Abhängigkeit von der gemessenen Tiefe des Formpuders umfasst.

21. Verfahren nach einem der Ansprüche 18 bis 20,
**dadurch gekennzeichnet, dass**
es des Weiteren den Schritt des Regulierens des Pegels von flüssigem Metall in der Form in Abhängigkeit von dem gemessenen Pegel umfasst.

## Revendications

1. Dispositif de mesure (20) pour mesurer des paramètres prédéfinis d'un métal liquide (31) dans un conteneur (1), ledit conteneur comprenant une ouverture d'entrée (1a) à travers laquelle le métal liquide est introduit dans le conteneur, ledit dispositif de mesure comprenant un couvercle métallique (10) adapté pour être placé sur ladite ouverture d'entrée dudit conteneur de façon à former, en combinaison avec le conteneur, une cavité électromagnétique résonnante ouverte (35), ledit dispositif de mesure comprenant des moyens de détection (41) adaptés pour détecter le comportement électromagnétique de la cavité de façon à obtenir lesdits paramètres prédéfinis en fonction dudit comportement électromagnétique, ledit dispositif comprenant un dispositif d'émission (21) et un dispositif de réception (22) adaptés pour introduire des signaux électromagnétiques d'entrée dans la cavité (35) et pour recevoir des signaux électromagnétiques de sortie en provenance de ladite cavité, **caractérisé en ce que** ledit dispositif est adapté pour mesurer à la fois le niveau dudit métal liquide (31) dans ledit conteneur (1) et la profondeur de poudre à mouler (32) flottant sur ledit métal liquide, **en ce que** lesdits moyens de détection (41) sont couplés audit dispositif de réception (22) et sont adaptés pour détecter à la fois la fréquence de résonance de la cavité et la largeur de bande de la courbe de résonance, et **en ce que** ledit dispositif d'émission comprend en outre des moyens de calcul adaptés pour calculer ledit niveau dudit métal liquide et ladite profondeur de ladite poudre à mouler en fonction à la fois de ladite fréquence de résonance de la cavité et de ladite largeur de bande de la courbe de résonance.

2. Dispositif de mesure selon la revendication 1, **caractérisé en ce que** ledit dispositif d'émission (21) et ledit dispositif de réception (22) sont adaptés pour introduire lesdits signaux électromagnétiques d'entrée dans ladite cavité (35) et pour recevoir lesdits signaux électromagnétiques de sortie en provenance de ladite cavité (35) par l'intermédiaire d'ouvertures d'entrée et de sortie correspondantes (21a, 22a) dudit conteneur, respectivement.

3. Dispositif de mesure selon l'une des revendications 1 et 2, **caractérisé en ce que** ledit dispositif d'émission (21) est adapté pour introduire lesdits signaux électromagnétiques dans ladite cavité dans les limites d'une plage de fréquence prédéterminée.

4. Dispositif de mesure selon l'une des revendications 1 à 3, **caractérisé en ce que** ledit dispositif d'émission est adapté pour introduire lesdits signaux électromagnétiques dans ladite cavité conformément à un programme temporel prédéfini.

5. Dispositif de mesure selon l'une des revendications 1 à 4, **caractérisé en ce que** ledit couvercle comprend une plaque principale (11) comportant au moins une ouverture traversante (14) dont la forme et la dimension sont adaptées pour influencer le comportement électromagnétique de la cavité.

6. Dispositif de mesure selon la revendication 5, **caractérisé en ce que** ledit couvercle comprend au moins deux ouvertures (14) de forme rectangulaire.

7. Dispositif de mesure selon l'une des revendications 5 et 6, **caractérisé en ce que** ledit dispositif comprend en outre un tube (12) fixé fermement à ladite plaque principale (11) et disposé transversalement par rapport à ladite plaque principale (11).

8. Appareil de coulée du type adapté pour une utilisation dans un processus de coulée continue, ledit appareil comprenant un conteneur de coulée (1) comportant une ouverture d'entrée (1a) pour recevoir du métal liquide et une ouverture de sortie (1 b) pour décharger le métal solidifié, ledit conteneur étant adapté pour contenir une quantité prédéfinie de métal liquide (31) et une quantité prédéfinie de poudre à mouler flottant sur ledit métal liquide, ledit appareil étant **caractérisé en ce qu'**il est équipé d'un dispositif de mesure (20) selon l'une des revendications 1 à 7, ledit couvercle dudit dispositif de mesure étant placé sur ladite ouverture d'entrée de façon à former, en combinaison avec le conteneur et le métal liquide qui y est contenu, une cavité électromagnétique résonnante ouverte (35).

9. Appareil de coulée selon la revendication 8, **caractérisé en ce qu'**il comprend en outre des moyens pour introduire de la poudre à mouler (32) à l'intérieur dudit conteneur.

10. Appareil de coulée selon la revendication 9, **caractérisé en ce qu'**il comprend en outre des moyens pour régler la profondeur de la poudre à mouler dans le conteneur en fonction de la profondeur de la poudre à mouler telle que détectée.

11. Appareil de coulée selon l'une des revendications 8 à 10, **caractérisé en ce qu'**il comprend en outre des moyens pour régler le niveau du métal liquide dans le conteneur en fonction du niveau tel que détecté.

12. Procédé de mesure pour mesurer des paramètres prédéfinis d'un métal liquide (31) dans un conteneur (1), ledit conteneur comprenant une ouverture d'entrée (1a) à travers laquelle le métal liquide est introduit dans le conteneur, ledit procédé de mesure comprenant les étapes consistant à :
former une cavité électromagnétique résonnante ouverte (35) au-dessus dudit métal liquide (31) ;
détecter le comportement électromagnétique de la cavité de façon à obtenir lesdits paramètres prédéfinis en fonction dudit comportement électromagnétique, ledit procédé de mesure comprenant en outre les étapes consistant à :
introduire des signaux électromagnétiques d'entrée dans ladite cavité (35) ;
recevoir des signaux électromagnétiques de sortie en provenance de ladite cavité, **caractérisé en ce qu'**il comprend la détection à la fois de la fréquence de résonance de la cavité et de la largeur de bande de la courbe de résonance, et **en ce qu'**il comprend le calcul du niveau dudit métal liquide dans ledit conteneur et/ou de la profondeur de la poudre à mouler flottant sur ledit métal liquide en fonction de ladite fréquence de résonance de la cavité et de ladite largeur de bande de la courbe de résonance.

13. Procédé de mesure selon la revendication 12, **caractérisé en ce que** des signaux électromagnétiques compris dans une plage de fréquence prédéfinie sont introduits dans la cavité.

14. Procédé de mesure selon l'une des revendications 12 et 13, **caractérisé en ce que** lesdits signaux électromagnétiques sont introduits dans la cavité conformément à un programme temporel prédéfini.

15. Procédé de mesure selon l'une des revendications 12 à 14, **caractérisé en ce que** ledit conteneur est un conteneur de coulée adapté pour une utilisation dans un processus de coulée continue et comprend une ouverture de sortie (1b) pour décharger le métal solidifié, et **en ce que** ladite cavité électromagnétique ouverte est définie au moyen d'un couvercle (10), ledit couvercle comprenant une plaque principale (11) comportant au moins une ouverture traversante, dont la forme et la dimension sont adaptées pour influencer le comportement électromagnétique de la cavité.

16. Procédé de mesure selon la revendication 15, **caractérisé en ce que** ladite plaque principale (11) comprend au moins deux ouvertures (14) de forme rectangulaire.

17. Procédé de mesure selon l'une des revendications 15 et 16, **caractérisé en ce que** le comportement électromagnétique de la cavité est en outre influencé au moyen d'un tube (12) fixé fermement à ladite plaque principale (11) et disposé transversalement par rapport au couvercle (11).

18. Processus de coulée continue comprenant l'introduction d'un métal liquide (31) dans un moule de coulée continue (1) et l'extraction de métal solidifié hors dudit moule, ledit processus comprenant en outre la mesure de paramètres prédéfinis du métal liquide dans le moule, ledit processus étant **caractérisé en ce que** lesdits paramètres prédéfinis comprennent le niveau de métal liquide dans ledit moule et/ou la profondeur de poudre à mouler flottant sur ledit métal liquide, ces paramètres étant mesurés conformément un procédé de mesure selon l'une des revendications 12 à 17.

19. Processus selon la revendication 18, comprenant en outre l'introduction de poudre à mouler (32) dans ledit moule.

20. Processus selon l'une des revendications 18 et 19, **caractérisé en ce que** ledit processus comprend en outre le réglage de la profondeur de la poudre à mouler dans le moule en fonction de la profondeur de la poudre à mouler telle que détectée.

21. Processus selon l'une des revendications 18 à 20, **caractérisé en ce que** ledit processus comprend en outre l'étape consistant à régler le niveau de métal liquide dans le moule en fonction du niveau tel que mesuré.
